# EUROPEAN PATENT APPLICATION

(11) **EP 4 447 205 A1**
(43) Date of publication of application: **16.10.2024**
(21) Application number: 22927790.0
(22) Date of filing: 25.02.2022
(51) Int. Cl.: H01M 50/15

(54) **INSULATION MEMBER, ENDCAP ASSEMBLY, BATTERY CELL, BATTERY, AND ELECTRICAL DEVICE**

(71) Applicant: Contemporary Amperex Technology (Hong Kong) Limited, Central, Central And Western District (HK)
(72) Inventor: KE, Haibo, Ningde, Fujian 352100 (CN); LI, Quankun, Ningde, Fujian 352100 (CN); MEI, Xiang, Ningde, Fujian 352100 (CN); WANG, Peng, Ningde, Fujian 352100 (CN); WU, Ningsheng, Ningde, Fujian 352100 (CN); CHEN, Yanlin, Ningde, Fujian 352100 (CN)
(74) Representative: Holt, Lucy Rose
(86) International application number: PCT/CN2022/078068
(87) International publication number: WO 2023/159507

(57) **Abstract**

The embodiments of the present application provide an insulation member, an endcap assembly, a battery cell, a battery, and an electrical device. The insulation member is used for the battery cell and comprises: an insulation member body having a first face and a second face which are oppositely arranged in the thickness direction of the insulation member body, the first face facing an electrode assembly of the battery cell, and the second face facing away the electrode assembly; and a protrusion formed on the first face and used for abutting against the electrode assembly, wherein the protrusion is provided with air holes, and the air holes penetrate through the protrusion in a direction intersecting the thickness direction. The insulation member enhances the safety of the battery cell.

## Description

### Technical Field

The present application relates to the technical field of batteries, and in particular, to an insulator, an end cover assembly, a battery cell, a battery and an electrical device.

### Background

Energy saving and emission reduction is the key to sustainable development of the automobile industry. In this case, an electric vehicle has become an important assembly part of the sustainable development of the automobile industry because of their advantages of energy saving and environmental protection. For the electric vehicle, a battery technology is an important factor related to its development.

In the development of battery technology, safety is also a non-negligible issue in addition to improvement of performance of the battery. If the safety of the battery cannot be guaranteed, the battery cannot be used. Therefore, how to enhance the safety of the battery is an urgent technical problem to be solved in the battery technology.

### Summary of the Invention

Embodiments of the present application provide an insulator, an end cover assembly, a battery cell, a battery, and an electrical device, which can enhance safety of the battery cell.

In a first aspect, the present application provides an insulator for a battery cell, including: an insulator body, having a first surface and a second surface oppositely disposed in its thickness direction, the first surface facing an electrode assembly of the battery cell, and the second surface facing away from the electrode assembly; and a protrusion, formed on the first surface and used for abutting against the electrode assembly; wherein the protrusion is provided with an air vent, and the air vent runs through the protrusion in a direction intersecting with the thickness direction.

According to the insulator of the example of the present application, since the air vent runs through the protrusion in the direction intersecting with the thickness direction, in other words, an extending direction of the air vent intersects a thickness direction of an insulator body, and the air vent runs through the protrusion, so that gas can pass through the protrusion quickly when flowing through the protrusion, thereby reducing the resistance of the protrusion to the flow of the gas and facilitating the flow of the gas; and when thermal runaway of the battery cell occurs and a pressure relief mechanism is activated, the gas can flow from an area where the gas is generated quickly towards the pressure relief mechanism to be discharged from the pressure relief mechanism, thereby reducing a risk of cracking failure of a weld seam between an end cover and a case, and improving the safety of the battery cell.

According to some embodiments of the present application, the protrusion includes a bottom surface and an outer peripheral surface, the bottom surface is used to abut against the electrode assembly, the outer peripheral surface is disposed around the bottom surface, the outer peripheral surface connects the bottom surface with the first surface, and the air vent is disposed in the outer peripheral surface.

In the above solution, the bottom surface is a surface of the protrusion for abutting against the electrode assembly. By abutting the bottom surface with the electrode assembly, positioning of the insulator to the electrode assembly can be realized. In the battery cell using the insulator, the electrode assembly has better assembly stability; and the air vent is disposed on the outer peripheral surface to facilitate the passage of the gas through the protrusion and reduce the resistance of the protrusion to gas flow.

According to some embodiments of the present application, the protrusion extends in a first direction, the air vent runs through the protrusion in a second direction perpendicular to the first direction, and the first direction and the second direction are both parallel to the first surface.

In the above solution, the extending direction of the air vent is perpendicular to the extending direction of the protrusion, and an extending length of the air vent is relatively short, that is, a path for the gas to pass through the protrusion is relatively short, which facilitates the gas to pass through the protrusion quickly and improves smoothness of the gas flow.

According to some embodiments of the present application, the protrusion is provided with the plurality of the air vents, and the plurality of air vents are disposed at intervals in the first direction.

In the above solution, the plurality of air vents are disposed at intervals in the extending direction of the protrusion, so that the protrusion has a plurality of positions for gas circulation, which facilitates the passage of the gas through the protrusion and improves passage efficiency of the gas.

According to some embodiments of the present application, a plurality of protrusions are disposed, and the plurality of protrusions are disposed at intervals in the second direction.

In the above solution, the plurality of protrusions are disposed at intervals in the second direction, so that the insulator has higher strength, and the insulator and the electrode assembly have more contact positions, which can better position the electrode assembly.

According to some embodiments of the present application, the insulator body is a rectangular plate, the second direction is a length direction of the insulator body, and the protrusions include a first protrusion, a second protrusion and a third protrusion. The first protrusion and the third protrusion are located at both ends of the insulator body in the length direction, and the second protrusion is located between the first protrusion and the third protrusion.

In the above solution, the first protrusion and the third protrusion are located at both ends of the insulator body in the length direction, and the second protrusion is located between the first protrusion and the third protrusion, so that the insulator body has higher strength in the length direction of the insulator body, and thus the insulator has a better positioning effect on the electrode assembly in the length direction of the insulator body.

According to some embodiments of the present application, the second protrusion is of a hollow structure, the second surface is provided with an opening communicating with the interior of the second protrusion, and the air vent in the second protrusion communicates with the interior of the second protrusion.

In the above solution, the second protrusion is of a hollow structure, and the air vent of the second protrusion communicates with the interior of the second protrusion. The interior of the second protrusion can gather the gas and facilitate gas circulation. The gas located in the interior of the second protrusion can flow toward the opening, so as to facilitate the discharge of the gas in the second protrusion.

According to some embodiments of the present application, the second surface is provided with a groove for avoiding the pressure relief mechanism of the battery cell, and the groove at least partially overlaps with the opening.

In the above solution, the groove corresponds to the pressure relief mechanism, and the groove and the opening at least partially overlap, so that the gas flows toward the opening after entering the second protrusion, so as to quickly reach the pressure relief mechanism, and facilitate rapid pressure relief.

In a second aspect, the present application provides an end cover assembly for a battery cell, including: an end cover; an electrode terminal, disposed on the end cover; a pressure relief mechanism, disposed on the end cover and configured to release internal pressure of the battery cell when the internal pressure reaches a threshold value; and the insulator as described in any one of the above embodiments, disposed on one side of the end cover facing the interior of the battery cell.

According to the end cover assembly of the example of the present application, the insulator is disposed on one side of the end cover facing the interior of the battery cell, and the battery cell formed by the end cover assembly can improve the smoothness of gas flow, so as to facilitate discharge of the gas via the pressure relief mechanism, and improve safety of the battery cell.

According to some embodiments of the present application, the insulator body is in the shape of cuboid, the protrusion includes a second protrusion, the second protrusion is disposed in the middle of the insulator body, the second protrusion extends in the width direction of the insulator body, an air vent runs through the second protrusion in a length direction of the insulator body, the second protrusion is of a hollow structure, a second surface is provided with an opening communicating with the interior of the second protrusion, the air vent in the second protrusion communicates with the interior of the second protrusion, the pressure relief mechanism is disposed on a position of the end cover corresponding to the second protrusion, and in the thickness direction, a projection of the pressure relief mechanism at least partially overlaps with a projection of the opening.

In the above solution, the pressure relief mechanism is disposed corresponding to the second protrusion, the second protrusion is of a hollow structure, and the pressure relief mechanism at least partially overlaps with the opening, so that the gas can flow toward the pressure relief mechanism after gathering inside the second protrusion, thereby increasing a flow rate of the gas flowing to the pressure relief mechanism, and facilitating the pressure relief mechanism to release pressure in time when thermal runaway of the battery cell occurs.

According to some embodiments of the present application, the second surface is provided with a positioning portion, the end cover is provided with a positioning hole corresponding to the positioning portion, and the positioning portion is inserted into the positioning hole.

In the above solution, the assembling of the insulator and the end cover is realized by inserting the positioning portion into the positioning hole, and the structure is simple and easy to operate.

In a third aspect, the present application provides a battery cell, including: a case with an end opening; an electrode assembly, disposed in the case; and the end cover assembly described as any one of the above embodiments, the end cover covers the end opening, and the protrusion abuts against the electrode assembly.

According to the battery cell of the example of the present application, the above end cover assembly is adopted, when thermal runaway of the battery cell occurs, the gas generated inside the battery cell can quickly flow to the pressure relief mechanism, which improves the safety of the battery cell.

According to some embodiments of the present application, the battery cell further includes: an insulating film, wrapped outside the electrode assembly for insulating and isolating the electrode assembly from the case. The insulating film is connected with the protrusion, the insulating film is provided with a notch, and the notch is disposed corresponding to the air vent, so that the gas generated inside the battery cell enters the air vent through the notch.

In the above solution, the notch disposed in the insulating film is disposed corresponding to the air vent, which can facilitate the circulation of gas while ensuring the connection between the insulating film and the insulator and an insulation and isolation effect of the insulating film on the electrode assembly. The gas between the insulating film and the case can enter the air vent via the notch, and quickly flow toward the pressure relief mechanism.

According to some embodiments of the present application, the insulating film is in hot melt connection with the protrusion.

In the above solution, the insulating film is in hot melt connection with the protrusion, so as to ensure the stability of the connection between the insulating film and the protrusion.

In a fourth aspect, the present application provides a battery, including the battery cell described as any one of the above embodiments.

In a fifth aspect, the present application provides electrical device, including the battery cell described as any one of the above embodiments.

In a sixth aspect, the present application provides a manufacturing method of a battery cell, including: providing a case, the case having an end opening; providing an electrode assembly; providing an end cover assembly, the end cover assembly including an end cover, an electrode terminal, a pressure relief mechanism, and an insulator, wherein the electrode terminal is disposed on the end cover, the pressure relief mechanism is disposed on the end cover, the pressure relief mechanism is configured to release an internal pressure of the battery cell when the internal pressure reaches a threshold value, the insulator is disposed on the end cover, the insulator includes an insulator body and a protrusion, the insulator body has a first surface and a second surface oppositely disposed in its thickness direction, the protrusion is formed on the first surface, the protrusion is provided with an air vent, and the air vent runs through the protrusion in a direction intersecting with the thickness direction; placing the electrode assembly in the case; and covering the end opening with the end cover, so that the insulator is located on one side of the end cover facing the interior of the battery cell, and the protrusion abuts against the electrode assembly.

In a seventh aspect, the present application provides manufacturing equipment for a battery cell, including: a providing module, configured to provide a case, provide an electrode assembly and provide an end cover assembly, wherein the case has an end opening, the end cover assembly includes an end cover, an electrode terminal, a pressure relief mechanism, and an insulator, the electrode terminal is disposed on the end cover, the pressure relief mechanism is disposed on the end cover, the pressure relief mechanism is configured to release an internal pressure of the battery cell when the internal pressure reaches a threshold value, the insulator is disposed on the end cover, the insulator includes an insulator body and a protrusion, the insulator body has a first surface and a second surface oppositely disposed in its thickness direction, the protrusion is formed on the first surface, the protrusion is provided with an air vent, and the air vent runs through the protrusion in a direction intersecting with the thickness direction; and an installing module, configured to place the electrode assembly in the case, and cover the end cover over the end opening, so that the insulator is located on one side of the end cover facing the interior of the battery cell, and the protrusion abuts against the electrode assembly.

The above description is only a summary of the technical solutions of the present application. In order to be able to understand the technical means of the present application more clearly, the technical means can be implemented according to the content of the specification. Furthermore, to make the above and other objectives, features and advantages of the present application more comprehensible, specific embodiments of the present application are exemplified below.

### Description of Drawings

In order to illustrate the technical solutions of the embodiments of the present application more clearly, the following briefly introduces the drawings required in the embodiments of the present application. Obviously, the drawings described below are only some embodiments of the present application. For those of ordinary skill in the art, other drawings can also be obtained according to the drawings without any creative effort.
Fig. 1 is a schematic structural diagram of a vehicle provided by some embodiments of the present application;
Fig. 2 is a schematic structural breakdown diagram of a battery provided by some embodiments of the present application;
Fig. 3 is a schematic structural breakdown diagram of a battery cell provided by some embodiments of the present application;
Fig. 4 is a schematic diagram of an assembly state of an end cover assembly and an electrode assembly provided by some embodiments of the present application;
Fig. 5 is a left view of Fig. 4;
Fig. 6 is a schematic structural diagram of an insulator on a first surface provided by some embodiments of the present application;
Fig. 7 is a schematic structural diagram of an insulator on a second surface provided by some embodiments of the present application;
Fig. 8 is a schematic structural diagram of an insulator on a first surface provided by some other embodiments of the present application;
Fig. 9 is a schematic breakdown diagram of a partial structure of a battery cell provided by some embodiments of the present application;
Fig. 10 is a schematic assembling diagram of an insulating film and insulator provided by some embodiments of the present application;
Fig. 11 is a schematic flowchart of a manufacturing method of a battery cell provided by some embodiments of the present application; and
Fig. 12 is a schematic flowchart of manufacturing equipment for a battery cell provided by some embodiments of the present application.

In the drawings, the drawings are not drawn to actual scale.

Reference numeral description: 100-Battery; 10-Box body; 11-First portion; 12-Second portion; 20-Battery cell; 21-End cover assembly; 211-End cover; 212-Electrode terminal; 213-Pressure relief mechanism; 214-Insulator; 2141-Insulator body; 21411-First surface; 21412-Second surface; 21413-Opening; 21414-Groove; 21415-Positioning portion; 2142-Protrusion; 2142a-First protrusion; 2142b-Second protrusion; 2142c-Third protrusion; 21421-Bottom surface; 21422-Outer peripheral surface; 2143-Air vent; 2144-Concave portion; 22-Case; 221-End opening; 23-Electrode assembly; 24-Insulating film; 241-Notch; 25-Connecting component; 200-Controller; 300-Motor; and 1000-Vehicle.

### Detailed Description

The embodiments of the present application are further described in detail below with reference to the drawings and examples. The following detailed description of the examples and the drawings are used to illustrate the principles of the present application by way of example, but should not be used to limit the scope of the present application, that is, the present application is not limited to the described examples.

Unless otherwise defined, all technical and scientific terms used herein have the same meaning as commonly understood by those skilled in the art belonging to the technical field of the present application; the terms used in the specification of the present application herein are intended only for the purpose of describing specific examples and are not intended to limit the present application; the terms "including" and "having" and any variations thereof in the specification and the claims of the present application and in the description of drawings above are intended to cover non-exclusive inclusion.

In the description of the embodiments of the present application, the technical terms "first", "second", and the like are used only to distinguish between different objects, and are not to be understood as indicating or implying a relative importance or implicitly specifying the number, particular order, or primary and secondary relation of the technical features indicated.

Reference herein to "an example" means that a particular feature, structure, or characteristic described in connection with the example can be included in at least one example of the present application. The appearance of this phrase in various places in the specification does not necessarily refer to the same example, nor is it a separate or alternative example that is mutually exclusive with other examples. It is explicitly and implicitly understood by those skilled in the art that the examples described herein may be combined with other examples.

In the description of the embodiments of the present application, the term "a plurality of' refers to two or more (including two), and similarly, "multiple groups" refers to two or more (including two) groups, and "multiple sheets" refers to two or more (including two) sheets.

In the description of the embodiments of the present application, the orientation or position relationship indicated by the technical terms "center", "longitudinal", "transverse", "length", "width", "thickness", "upper", "lower", "front", "back", "left", "right", "vertical", "horizontal", "top", "bottom", "inner", "outer", "clockwise", "counterclockwise", "axial", "radial", "circumferential", etc. are orientation or position relationship shown based on the drawings and are intended to facilitate the description of the embodiments of the present application and simplify the description only, rather than indicating or implying that the device or element referred to must have a particular orientation or be constructed and operated in a particular orientation, and therefore are not to be interpreted as limitations on the embodiments of the present application.

In the description of the present application, it should be noted that the terms "installing", "connecting", and "connection" should be understood in a broad sense, unless otherwise explicitly specified or defined. For example, it may be a fixed connection, a detachable connection, or an integrated connection; it may be a mechanical connection or an electric connection; and it may be a direct connection or an indirect connection through an intermediate medium, or may be a communication between the interior of two elements. For those of ordinary skill in the art, the specific meanings of the above terms in the present application may be understood according to specific circumstances.

In the present application, a battery cell may include a lithium-ion secondary battery, a lithium-ion primary battery, a lithium-sulfur battery, a sodium-lithium-ion battery, a sodium-ion battery, a magnesium-ion battery, or the like, without limitation in the embodiments of the present application. The battery cell may be cylindrical, flat, rectangular, or in other shapes, which is not limited in the embodiments of the present application. The battery cell is generally divided into three types according to encapsulating manners: a cylindrical battery cell, a rectangular battery cell, and a pouch battery cell, which are not limited in the embodiments of the present application.

A battery mentioned in the embodiments of the present application refers to a single physical module including one or more battery cells to provide a higher voltage and capacity. For example, the battery mentioned in the present application may include a battery module, a battery pack, or the like. The battery generally includes a box body for encapsulating the one or more battery cells. The box body may prevent liquids or other foreign matters from affecting charging or discharging of the battery cells.

The battery cell includes an electrode assembly and an electrolyte solution, and the electrode assembly is composed of a positive electrode sheet, a negative electrode sheet and a diaphragm. The battery cell operates mainly relying on movement of metal ions between the positive electrode sheet and the negative electrode sheet. The positive electrode sheet includes a positive electrode current collector and a positive electrode active material layer. A surface of the positive electrode current collector is coated with the positive electrode active material layer. Current collectors not coated with the positive electrode active material layer protrude from the current collector coated with the positive electrode active material layer. The current collectors not coated with the positive electrode active material layer serve as positive electrode tabs. Taking a lithium-ion battery as an example, a material of the positive current collector may be aluminum, and the positive electrode active material may be lithium cobalt oxide, lithium iron phosphate, ternary lithium, lithium manganate, or the like. The negative electrode sheet includes a negative electrode current collector and a negative electrode active material layer. A surface of the negative electrode current collector is coated with the negative electrode active material layer. Current collectors not coated with the negative electrode active material layer protrude from the current collector coated with the negative electrode active material layer. The current collectors not coated with the negative electrode active material layer serve as negative electrode tabs. A material of the negative electrode current collector may be copper, and the negative electrode active material may be carbon, silicon, or the like. In order to ensure that no fusing occurs when a large current passes, there are a plurality of positive electrode tabs which are stacked together, and there are a plurality of negative electrode tabs which are stacked together. A diaphragm may be made from polypropylene (PP), polyethylene (PE), or the like.

The battery cell further includes a case, an end cover and an insulator. The case has an end opening, the electrode assembly is disposed in the case, the insulator covers the end opening, the insulator is disposed on one side of the end cover facing the interior of the battery cell, and the insulator is used to insulate and isolate the electrode assembly and the end cover.

The battery cell further includes a pressure relief mechanism, and the pressure relief mechanism may be disposed on the end cover to release an internal pressure or temperature of the battery cell.

The pressure relief mechanism refers to an element or component that is actuated to release the internal pressure or temperature when the internal pressure or temperature of the battery cell reaches a predetermined threshold value. The pressure relief mechanism may take the form of an explosion-proof valve, a gas valve, a pressure relief valve or a safety valve, etc., and may specifically adopt a pressure-sensitive or temperature-sensitive element or structure. That is, when the internal pressure or temperature of the battery cell reaches the predetermined threshold value, the pressure relief mechanism performs an action or a weak structure disposed in the pressure relief mechanism is damaged, so as to form an opening or channel for releasing the internal pressure or temperature.

The "actuate" mentioned in the present application means that the pressure relief mechanism generates actions or is activated to a certain state, so that the internal pressure and temperature of the battery cell can be released. Actions generated by the pressure relief mechanism may include, but are not limited to, at least a part of the pressure relief mechanism being broken, crushed, torn or opened, and the like. When the pressure relief mechanism is actuated, high temperature and high pressure substances (such as gas) inside the battery cell may be discharged outward from the actuated part as emissions. In this way, the pressure and temperature of the battery cell may be relieved under controllable pressure or temperature, so as to prevent potential more serious accidents.

Many design factors, such as energy density, discharge capacity, charge-discharge rate and other performance parameters, should be considered in the development of the battery technology. In addition, the safety of the battery further needs to be taken into account.

In the prior art, the end cover of the battery cell is welded to the case, the insulator is disposed on one side of the end cover facing the interior of the battery cell, a surface of the insulator facing the electrode assembly is provided with a protrusion, and the protrusion is used to be connected with the electrode assembly, so as to realize the positioning of the electrode assembly. Since the pressure relief mechanism on the end cover is disposed in the middle of the end cover, and a position of the insulator corresponding to the pressure relief mechanism is provided with a middle protrusion, the middle protrusion abuts against the electrode assembly to reduce shaking of the electrode assembly. At the same time, a surface of the middle protrusion facing the electrode assembly is provided with an air vent extending in a thickness direction of the insulator. However, the inventor found that when thermal runaway of the battery cell occurs, the pressure relief mechanism (such as an explosion-proof valve) still has a problem of not being able to release the pressure in time. After analysis, it is found that when thermal runaway at a local area of the battery cell occurs, the gas evolution in this local area is relatively large, and the air pressure in this area rises rapidly, and the air vent of the middle protrusion facing the electrode assembly is covered by the electrode assembly. Due to resistance of the middle protrusion, the gas on both sides of the middle protrusion has poor fluidity, and the amount of gas flowing from the interior of the battery cell toward the pressure relief mechanism is small. At the moment of pressure relief by the pressure relief mechanism, because the gas evolved in the area with the large gas evolution cannot quickly flow to the pressure relief mechanism to be discharged, the gas in this area impacts the nearby case, causing the weld seam between the case and the end cover to crack, resulting in the risk of fire and explosion.

In view of this, in order to improve the safety of the battery cell, the inventor has designed an insulator for the battery cell after in-depth research. The insulator includes an insulator body and a protrusion. The insulator body has a first surface and a second surface oppositely disposed in its thickness direction, the first surface faces the electrode assembly of the battery cell, the second surface faces away from the electrode assembly, the protrusion is formed on the first surface, and the protrusion is used to abut against the electrode assembly, wherein the protrusion is provided with an air vent, and the air vent runs through the protrusion in a direction intersecting with the thickness direction. The air vent facilitates the gas to flow in the direction intersecting with the thickness direction and run through the protrusion, reduce the resistance of the protrusion to the gas flow, improve the smoothness of the gas flow, and facilitate the gas to flow toward the pressure relief mechanism disposed on the end cover.

In the battery cell constituted by such insulator, since the air vent runs through the protrusion in the direction intersecting with the thickness direction, in other words, an extending direction of the air vent intersects the thickness direction of the insulator body, and the air vent runs through the protrusion, so that gas can pass through the protrusion quickly when flowing through the protrusion, thereby reducing the resistance of the protrusion to the flow of the gas and facilitating the flow of the gas; and when thermal runaway of the battery cell occurs and a pressure relief mechanism is activated, the gas can flow from an area where the gas is generated quickly towards the pressure relief mechanism to be discharged from the pressure relief mechanism, thereby reducing a risk of cracking failure of a weld seam between the end cover and the case, and improving the safety of the battery cell.

The battery cell disclosed in the example of the present application can be used, but not limited to, in electrical device such as a vehicle, a ship, or an aircraft. A power supply system of the electrical device may be composed of the battery cell and battery disclosed in the present application.
embodiments of the present application provide electrical device that uses a battery cell as a power supply, and the electrical device may be, but is not limited to, a mobile phone, a tablet computer, a laptop, an electric toy, an electric tool, an electric bicycle, an electric motorcycle, an electric vehicle, a ship, a spacecraft, and so on. The electric toy may include fixed or mobile electric toys, such as a game console, an electric car toy, an electric ship toy, an electric airplane toy, and the like. The spacecraft may include an airplane, a rocket, a space shuttle, a spaceship, and the like.

For the convenience of description, the following embodiments are illustrated with an example in which the electrical device according to an example of the present application is vehicle 1000.

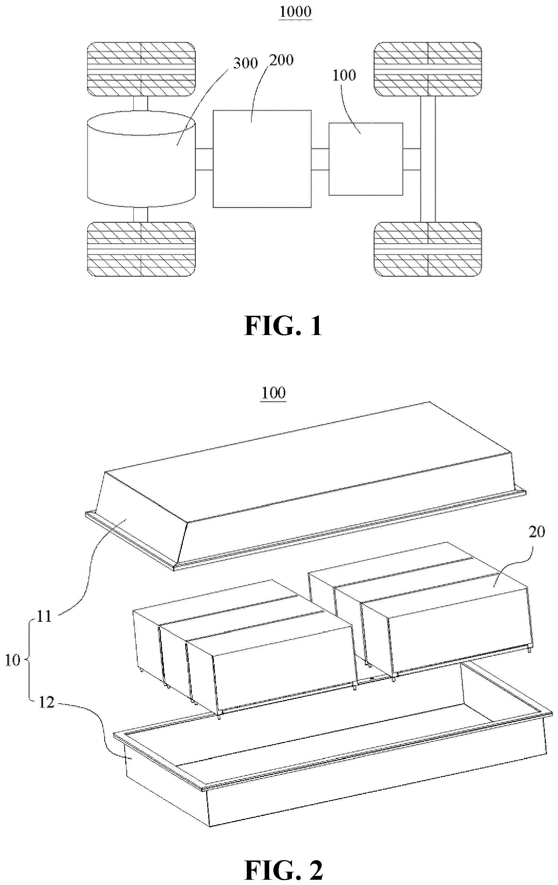

Please refer to the figure, Fig. 1 is a schematic structural diagram of vehicle 1000 provided by some embodiments of the present application. The vehicle may be a fuel vehicle, a gas vehicle, or a new energy vehicle, and the new energy vehicle may be an all-electric vehicle, a hybrid vehicle, or an extended-range electric vehicle. The interior of vehicle 1000 is provided with battery 100, and battery 100 may be provided at the bottom or head or tail of vehicle 1000. Battery 100 may be used for power supply of vehicle 1000. For example, battery 100 may be used as an operating power supply of vehicle 1000, and used for work electricity requirements of a circuit system of the vehicle, for example, for starting, navigation, and operation of the vehicle.

Vehicle 1000 may further include controller 200 and motor 300. Controller 200 is used to control battery 100 to power motor 300. For example, the controller is used for work electricity requirements of vehicle 1000 during starting, navigation, and traveling.

In some embodiments of the present application, battery 100 not only may serve as an operating power supply of vehicle 1000, but also may serve as a driving power supply of vehicle 1000, thus replacing or partially replacing fuel or natural gas to provide driving power for vehicle 1000.

Please refer to Fig. 2, Fig. 2 is a schematic structural breakdown diagram of battery 100 provided by some embodiments of the present application. Battery 100 includes box body 10 and battery cell 20, and battery cell 20 is accommodated within box body 10. Box body 10 is used to provide an accommodating space for battery cell 20, and box body 10 may be of various structures. In some embodiments, box body 10 may include first portion 11 and second portion 12. First portion 11 and second portion 12 are covered by each other, and first portion 11 and second portion 12 together define an accommodating space for accommodating battery cell 20. Second portion 12 may be of a hollow structure with one end open, first portion 11 may be of a plate-like structure, and first portion 11 covers an opening side of second portion 12, so that first portion 11 and second portion 12 together define the accommodating space. It is also possible that each of first portion 11 and second portion 12 is of a hollow structure with one side open, and the opening side of first portion 11 covers the opening side of second portion 12. Of course, box body 10 formed by first portion 11 and second portion 12 may be in various shapes, such as a cylinder or a cuboid.

In battery 100, there may be a plurality of battery cells 20, and the plurality of battery cells 20 may be connected in series or parallel or in parallel-series connection, and the mixed connection means that the plurality of battery cells 20 are connected in both series and parallel. The plurality of battery cells 20 may be directly connected in series, in parallel or in parallel-series connection together, and then the whole composed of the plurality of battery cells 20 is accommodated in box body 10; of course, battery 100 may also be in a form that the plurality of battery cells 20 are firstly connected in series or in parallel or in a mixed connection to form battery modules, and then the plurality of battery modules are connected in series or in parallel or in a mixed connection to form a whole, which is accommodated in box body 10. Battery 100 may further include other structures, for example, battery 100 may further include a bus component for electrically connecting the plurality of battery cells 20.

Each battery cell 20 may be a secondary battery or a primary battery; or may be a lithium-sulfur battery, a sodium-ion battery or a magnesium-ion battery, but is not limited thereto. Battery cell 20 may be in the shape of a cylinder, a flat body, a cuboid or others. The example of the present application is introduced by taking battery cell 20 as a cuboid as an example.

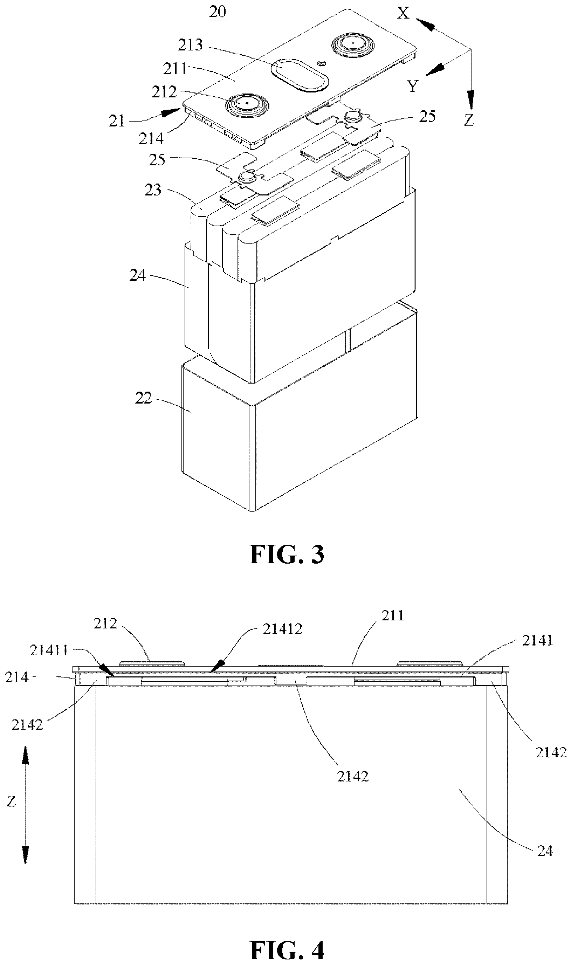

Please refer to Fig. 3, Fig. 3 is a schematic structural breakdown diagram of battery cell 20 provided by some embodiments of the present application. Battery cell 20 refers to the smallest unit that constitutes the battery. As shown in Fig. 3, battery cell 20 includes end cover assembly 21, case 22, electrode assembly 23 and other functional components.

End cover assembly 21 includes end cover 211, electrode terminal 212, pressure relief mechanism 213 and insulator 214. Electrode terminal 212 and pressure relief mechanism 213 may be disposed on end cover 211, and insulator 214 is disposed on an inner side of end cover 211.

End cover 211 is a component that covers an end opening of case 22 to isolate an internal environment of battery cell 20 from an external environment. Without limitation, a shape of end cover 211 may be adapted to a shape of case 22 to fit case 22. Optionally, end cover 211 may be made of a material with a certain hardness and strength (such as an aluminum alloy), so that end cover 211 is not prone to being deformed when it is extruded and collided, battery cell 20 can have a higher structural strength, and safety performance may also be improved. End cover 211 may also be made of various materials, such as copper, iron, aluminum, stainless steel, an aluminum alloy, plastic or the like.

Electrode terminal 212 may be used for electrical connection with electrode assembly 23 for outputting or inputting electric energy of battery cell 20.

Pressure relief mechanism 213 is used to release an internal pressure when internal pressure or temperature of battery cell 20 reaches a threshold value.

Case 22 is an assembly used to cooperate with end cover 211 to form the internal environment of battery cell 20, wherein the formed internal environment may be used to accommodate electrode assembly 23, an electrolyte solution and other components. Case 22 and end cover 211 may be independent components, an end opening may be disposed on case 22, and the internal environment of battery cell 20 may be formed by making end cover 211 cover the end opening at the end opening. Without limitation, end cover 211 and case 22 may also be integrated. Specifically, end cover 211 and case 22 may form a common connection surface before other components enter the case. When the interior of case 22 needs to be encapsulated, end cover 211 is made to cover case 22. The shape of case 22 may be determined according to the specific shape of electrode assembly 23. Case 22 may be made of various materials, such as copper, iron, aluminum, stainless steel, an aluminum alloy, plastic or the like. Case 22 and end cover 211 in the example of the present application are connected by welding.

Electrode assembly 23 is a component in which an electrochemical reaction occurs in battery cell 20. One or more electrode assemblies 23 may be contained in case 22. Electrode assembly 23 is mainly formed by winding or laminated placing a positive electrode sheet and a negative electrode sheet, and a diaphragm is usually disposed between the positive electrode sheet and the negative electrode sheet. The part of the positive electrode sheet and the negative electrode sheet with an active material constitutes a main body portion of electrode assembly 23, and parts of the positive electrode sheet and the negative electrode sheet without the active material respectively form tabs. A positive electrode tab and a negative electrode tab may be located at one end of the main body portion together or at two ends of the main body portion respectively. During charging and discharging processes of the battery, the positive electrode active material and the negative electrode active material react with the electrolyte solution, and the tabs are connected to electrode terminal 212 through connecting member 25 to form a current loop.

Insulator 214 is disposed on one side of end cover 211 facing the interior of battery cell 20, and insulator 214 may be used to isolate an electrical connection component in case 22 from end cover 211 to reduce the risk of short circuit. Exemplarily, insulator 214 may be plastic, rubber or the like.

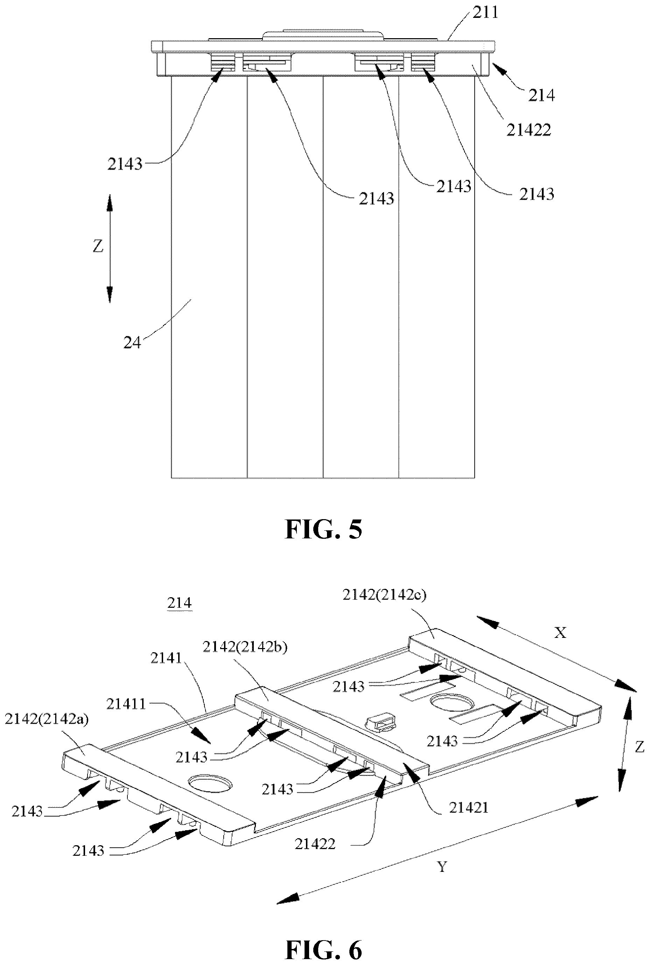

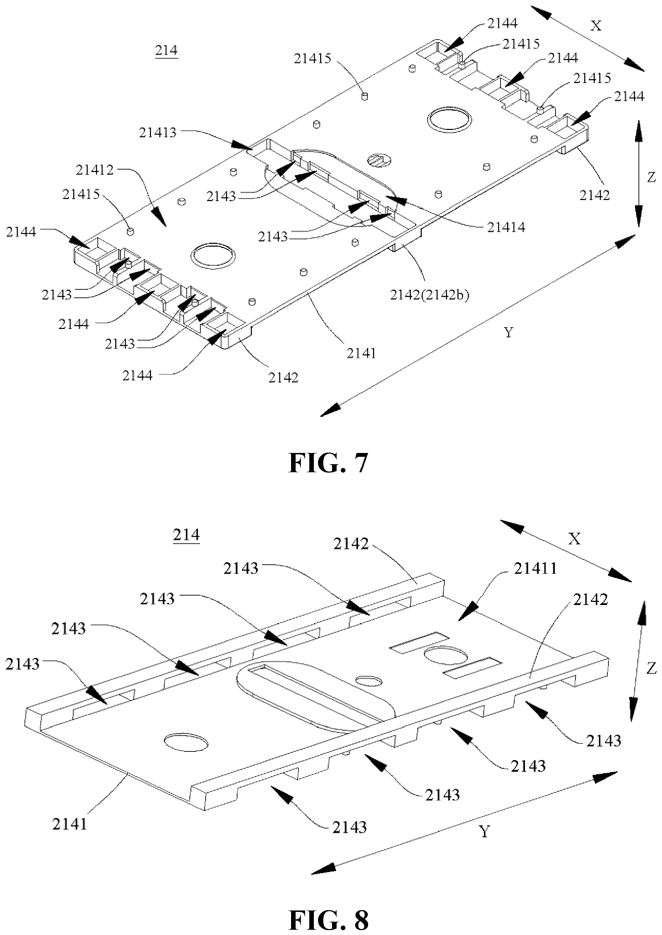

According to some embodiments of the present application, refer to Fig. 3, and please refer further to Figs. 4 to 7, Fig. 4 is a schematic diagram of an assembling state of end cover assembly 21 and electrode assembly 23 provided by some embodiments of the present application, Fig. 5 is a left view of Fig. 4, Fig. 6 is a schematic structural diagram of insulator 214 on first surface 21411 provided by some embodiments of the present application, and Fig. 7 is a schematic structural diagram of insulator 214 on second surface 21412 provided by some embodiments of the present application. The present application provides insulator 214, for battery cell 20, and insulator 214 includes insulator body 2141 and protrusion 2142. Insulator body 2141 has first surface 21411 and second surface 21412 oppositely disposed in its thickness direction Z, first surface 21411 faces electrode assembly 23 of battery cell 20, and second surface 21412 faces away from electrode assembly 23. Protrusion 2142 is formed on first surface 21411, and protrusion 2142 is used to abut against electrode assembly 23. Protrusion 2142 is provided with air vent 2143, and air vent 2143 runs through protrusion 2142 in a direction intersecting with thickness direction Z.

In the figure, the direction indicated by letter Z is the thickness direction of insulator body 2141.

First surface 21411 faces electrode assembly 23 of battery cell 20, second surface 21412 faces away from electrode assembly 23, first surface 21411 and second surface 21412 are the two surfaces of insulator body 2141 oppositely disposed in its thickness direction Z.

Protrusion 2142 is a component formed on first surface 21411 and used for cooperating with electrode assembly 23. Protrusion 2142 may be integrally formed with insulator body 2141, for example, protrusion 2142 and insulator body 2141 are formed by hot melting.

Air vent 2143 runs through protrusion 2142 in the direction intersecting with thickness direction Z, which means that an extending direction of air vent 2143 intersects with thickness direction Z of insulator body 2141, for example, the extending direction of air vent 2143 may be perpendicular to thickness direction Z, alternatively, the extending direction of air vent 2143 and thickness direction Z may also form an included angle.

Air vent 2143 is a through hole disposed in protrusion 2142 for realizing gas circulation.

According to insulator 214 of the example of the present application, since air vent 2143 runs through protrusion 2142 in the direction intersecting with thickness direction Z, in other words, the extending direction of air vent 2143 intersects with thickness direction Z of insulator body 2141, and air vent 2143 runs through protrusion 2142, so that gas can pass through protrusion 2142 quickly when flowing through protrusion 2142, thereby reducing the resistance of protrusion 2142 to the flow of the gas and facilitating the flow of the gas; and when thermal runaway of battery cell 20 occurs and pressure relief mechanism 213 is activated, the gas can flow from an area where the gas is generated quickly towards pressure relief mechanism 213 to be discharged from pressure relief mechanism 213, thereby reducing a risk of cracking failure of a weld seam between end cover 211 and case 22, and improving the safety of battery cell 20.

According to some embodiments of the present application, as shown in Fig. 5 and Fig. 6, protrusion 2142 includes bottom surface 21421 and outer peripheral surface 21412, bottom surface 21421 is used to abut against electrode assembly 23, outer peripheral surface 21412 is disposed around bottom surface 21421, outer peripheral surface 21412 connects bottom surface 21421 with first surface 21411, and air vent 2143 is disposed in outer peripheral surface 21412.

Bottom surface 21421 is a surface of protrusion 2142 facing electrode assembly 23, in other words, bottom surface 21421 is a surface of protrusion 2142 away from first surface 21411.

Outer peripheral surface 21412 is disposed around bottom surface 21421, and outer peripheral surface 21412 is disposed around an edge of bottom surface 21421.

Bottom surface 21421 is a surface of protrusion 2142 for abutting against electrode assembly 23. By abutting bottom surface 21421 with electrode assembly 23, positioning of insulator 214 to electrode assembly 23 can be realized. In battery cell 20 using insulator 214, electrode assembly 23 has better assembly stability; and air vent 2143 is disposed on outer peripheral surface 21412 to facilitate the passage of the gas through protrusion 2142 and reduce the resistance of protrusion 2142 to gas flow.

In some embodiments, in thickness direction Z of insulator body 2141, air vent 2143 may extend from first surface 21411 toward bottom surface 21421. In order to ensure the strength of protrusion 2142, there is a certain distance between air vent 2143 and bottom surface 21421 in thickness direction Z of insulator body 2141.

According to some embodiments of the present application, as shown in Fig. 6 and Fig. 7, protrusion 2142 extends in first direction X, and air vent 2143 runs through protrusion 2142 in second direction Y perpendicular to first direction X, and first direction X and second direction Y are both parallel to first surface 21411.

In the figure, a direction indicated by letter X is the first direction, a direction indicated by letter Y is the second direction, first direction X and second direction Y are both perpendicular to thickness direction Z of insulator body 2141.

First direction X and second direction Y are both parallel to first surface 21411, in other words, a plane formed by first direction X and second direction Y is parallel to first surface 21411.

The extending direction of air vent 2143 is perpendicular to the extending direction of protrusion 2142, and an extending length of air vent 2143 is relatively short, that is, a path for the gas to pass through protrusion 2142 is relatively short, which facilitates the gas to pass through protrusion 2142 quickly and improves smoothness of the gas flow.

In other embodiments of the present application, the extending direction of air vent 2143 may also form an included angle with the extending direction of protrusion 2142, and the included angle is not equal to 90°.

In some other embodiments of the present application, protrusion 2142 extends in first direction X, and air vent 2143 may also run through protrusion 2142 in first direction X.

According to some embodiments of the present application, protrusion 2142 is provided with the plurality of the air vents 2143, and the plurality of air vents 2143 are disposed at intervals in first direction X.

The plurality of air vents 2143 are disposed at intervals in first direction X, in other words, the plurality of air vents 2143 are disposed at intervals in the extending direction of protrusion 2142. The plurality of air vents 2143 may be located on a straight line parallel to first direction X, or the plurality of air vents 2143 may also be scattered.

The plurality of air vents 2143 are disposed at intervals in the extending direction of protrusion 2142, so that protrusion 2142 has a plurality of positions for gas circulation, which facilitates the passage of the gas through protrusion 2142 and improves passage efficiency of the gas.

According to some embodiments of the present application, the plurality of protrusions 2142 are disposed, and the plurality of protrusions 2142 are disposed at intervals in second direction Y.

The plurality of protrusions 2142 are disposed at intervals in second direction Y, and the plurality of protrusions 2142 are disposed in parallel. The disposing positions of air vents 2143 on the plurality of protrusions 2142 may be the same, and air vents 2143 of the plurality of protrusions 2142 are overlapped in second direction Y, which is convenient for processing and manufacturing; or, the disposing positions of air vents 2143 on the plurality of protrusions 2142 are different, and air vents 2143 of the plurality of protrusions 2142 do not overlap or partially overlap in second direction Y.

The plurality of protrusions 2142 are disposed at intervals in second direction Y, so that insulator 214 has higher strength, and insulator 214 and electrode assembly 23 have more contact positions, which can better position electrode assembly 23.

According to some embodiments of the present application, insulator body 2141 is a rectangular plate, second direction Y is a length direction of insulator body 2141, and protrusions 2142 include first protrusion 2142a, second protrusion 2142b and third protrusion 2142c. First protrusion 2142a and third protrusion 2142c are located at both ends of insulator body 2141 in the length direction, and second protrusion 2142b is located between first protrusion 2142a and the third protrusion 2142c.

Second direction Y is the length direction of insulator body 2141, and first direction X is the width direction of insulator body 2141. Protrusion 2142 extends in first direction X, which may be that protrusion 2142 runs through insulator body 2141 in the width direction of insulator body 2141 to increase the strength of insulator body 2141 in the width direction.

First protrusion 2142a and third protrusion 2142c are located at both ends of insulator body 2141 in the length direction, and second protrusion 2142b is located between first protrusion 2142a and third protrusion 2142c, so that insulator body 2141 has higher strength in the length direction of insulator body 2141, and thus insulator 214 has a better positioning effect on electrode assembly 23 in the length direction of insulator body 2141.

According to some embodiments of the present application, second protrusion 2142b is of a hollow structure, second surface 21412 is provided with opening 21413 communicating with the interior of second protrusion 2142b, and air vent 2143 in second protrusion 2142b communicates with the interior of second protrusion 2142b.

Opening 21413 is an area disposed on second surface 21412 for communicating with the interior of second protrusion 2142b. Opening 21413 may be a hollow portion on insulator 214, for example, opening 21413 may run through insulator body 2141 in thickness direction Z of insulator body 2141, that is, opening 21413 may extend from second surface 21412 to first surface 21411.

Second protrusion 2142b is of a hollow structure, and air vent 2143 of second protrusion 2142b communicates with the interior of second protrusion 2142b. The interior of second protrusion 2142b can gather the gas and facilitate gas circulation. The gas located in the interior of second protrusion 2142b can flow toward opening 21413, so as to facilitate the discharge of the gas in second protrusion 2142b.

Please refer to Fig. 8, Fig. 8 is a schematic structural diagram of insulator 214 on first surface 21411 provided by some embodiments of the present application. According to some embodiments of the present application, as shown in Fig. 8, protrusion 2142 may extend in second direction Y, second direction Y is the length direction of insulator body 2141, and air vent runs through protrusion 2142 in first direction X.

According to some embodiments of the present application, as shown in Fig. 7, second surface 21412 is provided with groove 21414 for avoiding pressure relief mechanism 213 of battery cell 20 (please see Fig. 3), and groove 21414 at least partly overlaps opening 21413.

Groove 21414 is an area of insulator body 2141 for assembling with pressure relief mechanism 213, and groove 21414 may be formed by second surface 21412 being concave toward first surface 21411. Groove 21414 may partially overlap opening 21413, or groove 21414 may also completely overlap opening 21413.

Groove 21414 corresponds to pressure relief mechanism 213, and groove 21414 and opening 21413 at least partially overlap, so that the gas flows toward opening 21413 after entering second protrusion 2142b, so as to quickly reach pressure relief mechanism 213, and facilitate rapid pressure relief.

According to some embodiments of the present application, as shown in Fig. 3, the present application provides end cover assembly 21 for battery cell 20. End cover assembly 21 includes end cover 211, electrode terminal 212, pressure relief mechanism 213 and insulator 214 provided by any one of above embodiments. Electrode terminal 212 is disposed on end cover 211; and pressure relief mechanism 213 is disposed on end cover 211, and pressure relief mechanism 213 is configured to release an internal pressure when the internal pressure of battery cell 20 reaches a threshold value. Insulator 214 is disposed on one side of end cover 211 facing the interior of battery cell 20.

Since electrode terminal 212 is disposed on end cover 211, insulator 214 is provided with a hole for avoiding electrode terminal 212, so as to facilitate an electrical connection between electrode terminal 212 and electrode assembly 23 of battery cell 20.

According to end cover assembly 21 of the example of the present application, insulator 214 is disposed on one side of end cover 211 facing the interior of battery cell 20, and battery cell 20 formed by end cover assembly 21 can improve the smoothness of gas flow, so as to facilitate discharge of the gas via pressure relief mechanism 213, and improve safety of battery cell 20.

According to some embodiments of the present application, as shown in Fig. 3, Fig. 6 and Fig. 7, insulator body 2141 is in the shape of cuboid, protrusion 2142 includes second protrusion 2142b, second protrusion 2142b is disposed in the middle of insulator body 2141, second protrusion 2142b extends in the width direction of insulator body 2141, air vent 2143 runs through second protrusion 2142b in a length direction of insulator body 2141, second protrusion 2142b is of a hollow structure, second surface 21412 is provided with opening 21413 communicating with the interior of second protrusion 2142b, air vent 2143 in second protrusion 2142b communicates with the interior of second protrusion 2142b, pressure relief mechanism 213 is disposed on a position of end cover 211 corresponding to second protrusion 2142b, and in thickness direction Z, a projection of pressure relief mechanism 213 at least partially overlaps with a projection of opening 21413.

Second protrusion 2142b is disposed in the middle of insulator body 2141, which means that second protrusion 2142b is located in a position of insulator body 2141 near a center of insulator body 2141, but it is not limited to second protrusion 2142b being located in at the center of insulator body 2141. For example, in the length direction of insulator body 2141, second protrusion 2142b may be located at the center of insulator body 2141, or second protrusion 2142b may also have a certain distance from the center of insulator body 2141.

Second protrusion 2142b extends in the width direction of insulator body 2141, which may be that second protrusion 2142b extends from one edge to the other opposite edge in the width direction of insulator body 2141, that is, second protrusion 2142b may run through insulator body 2141 in the width direction of insulator body 2141.

Second protrusion 2142b is of a hollow structure, air vent 2143 communicates with the interior of second protrusion 2142b when running through second protrusion 2142b, and gas can enter the interior of second protrusion 2142b via air vent 2143. Meanwhile, the gas inside second protrusion 2142b can flow toward end cover 211 via opening 21413.

In thickness direction Z, a projection of pressure relief mechanism 213 at least partially overlap a projection of opening 21413. In other words, on a plane perpendicular to thickness direction Z of insulating body 2141, the projection of pressure relief mechanism 213 at least partially overlaps the projection of opening 21413. For example, the projection of pressure relief mechanism 213 may at least partially overlap the projection of opening 21413, or the projection of pressure relief mechanism 213 may completely overlap the projection of opening 21413.

Pressure relief mechanism 213 is disposed corresponding to second protrusion 2142b, second protrusion 2142b is of a hollow structure, and pressure relief mechanism 213 at least partially overlaps opening 21413, so that the gas can flow toward pressure relief mechanism 213 after gathering inside second protrusion 2142b, thereby increasing a flow rate of the gas flowing to pressure relief mechanism 213, and facilitating pressure relief mechanism 213 to release pressure in time when thermal runaway of battery cell 20 occurs.

According to some embodiments of the present application, as shown in Fig. 7, second surface 21412 is provided with positioning portion 21415, end cover 211 is provided with a positioning hole (not shown in the figure) corresponding to positioning portion 21415, and positioning portion 21415 is inserted in the positioning hole.

Positioning portion 21415 is a component disposed on second surface 21412 for connecting and positioning with end cover 211, and positioning portion 21415 may protrude from second surface 21412. Positioning portion 21415 may be a positioning rod, and a cross section of the positioning rod may be circular, rectangular, triangular or special-shaped, etc. Optionally, the cross section of the positioning rod is circular, which is convenient for processing. A shape of the positioning hole corresponds to the cross-sectional shape of the positioning rod.

The assembling of insulator 214 and end cover 211 is realized by inserting positioning portion 21415 into the positioning hole, and the structure is simple and easy to operate.

According to some embodiments of the present application, please referring to Figs. 3 to 5, the present application provides battery cell 20. Battery cell 20 includes case 22, electrode assembly 23 and end cover assembly 21 provided by any one of the above embodiments, case 22 has an end opening, and electrode assembly 23 is disposed in case 22. End cover 211 covers the end opening, and protrusion 2142 abuts against electrode assembly 23.

End cover 211 covers the end opening, insulator 214 is located on one side of end cover 211 facing electrode assembly 23, and protrusion 2142 of insulator 214 abuts against electrode assembly 23 to realize the positioning of electrode assembly 23 and avoid position movement of electrode assembly 23 in case 22.

According to battery cell 20 of the example of the present application, above end cover assembly 21 is adopted, when thermal runaway of battery cell 20 occurs, the gas generated inside battery cell 20 can quickly flow to pressure relief mechanism 213, which improves the safety of the battery cell 20.

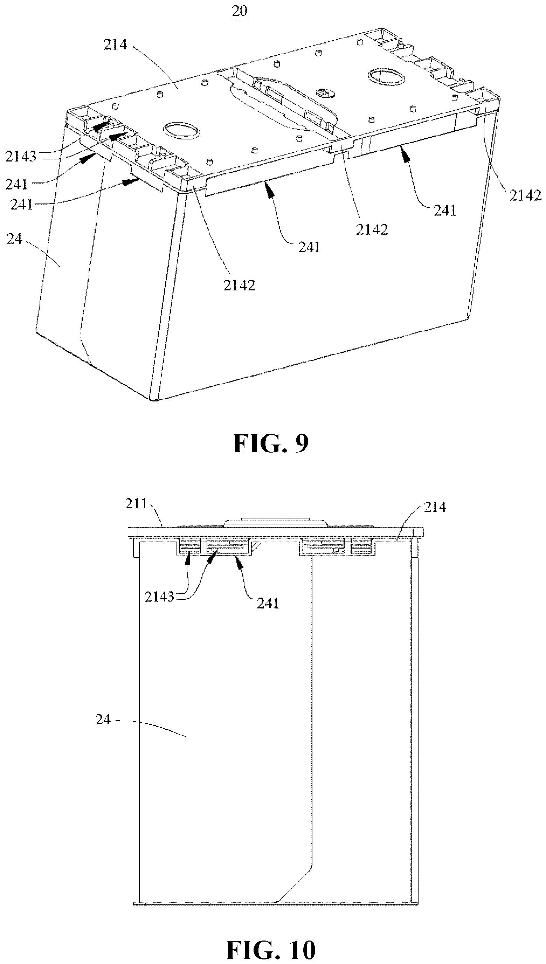

please refer to Fig. 3 and refer further to Fig. 9 and Fig. 10, Fig. 9 is a schematic breakdown diagram of a partial structure of battery cell 20 provided by some embodiments of the present application, and Fig. 10 is a schematic assembling diagram of insulating film 24 and insulator 214 provided by some embodiments of the present application. According to some embodiments of the present application, battery cell 20 further includes insulating film 24, insulating film 24 is wrapped outside electrode assembly 23, and insulating film 24 is used to insulate and isolate electrode assembly 23 from case 22. Insulating film 24 is connected with protrusion 2142, insulating film 24 is provided with notch 241, and notch 241 is disposed corresponding to air vent 2143, so that the gas generated inside battery cell 20 enters air vent 2143 through notch 241.

Insulating film 24 wraps electrode assembly 23, so that electrode assembly 23 is insulated and isolated from case 22. In order to ensure the insulation and isolation effect between electrode assembly 23 and case 22, insulating film 24 is usually disposed around an edge of electrode assembly 23.

Notch 241 disposed in insulating film 24 is disposed corresponding to air vent 2143, which can facilitate the circulation of gas while ensuring the connection between insulating film 24 and insulator 214 and an insulation and isolation effect of insulating film 24 on electrode assembly 23. The gas between insulating film 24 and case 22 can enter air vent 2143 via notch 241, and quickly flow toward pressure relief mechanism 213.

At the same time, in order to ensure the smooth flow of gas, as shown in Fig. 9, notch 241 is located at one end of insulating film 24 for being connected with insulator 214, notch 241 is further disposed between two adjacent protrusions 2142, that is, an area of insulating film 24 located between two adjacent notches 241 is connected with protrusion 2142 of insulator 214.

According to some embodiments of the present application, insulating film 24 is in hot melt connection with protrusion 2142.

insulating film 24 is in hot melt connection with protrusion 2142, so as to ensure the stability of the connection between insulating film 24 and protrusion 2142.

In some embodiments, an area where protrusion 2142 is connected to insulating film 24 is provided with a concave portion 2144 to reduce a weight of protrusion 2142.

According to some embodiments of the present application, the present application provides battery 100, and battery 100 includes battery cell 20 provided by any one of the above embodiments.

According to some embodiments of the present application, the present application provides electrical device. The electrical device includes battery cell 20 provided by any one of the above embodiments, and battery cell 20 is used for supplying electric energy to the electrical device.

The electrical device may be any of the aforementioned device or system that use battery cell 20.

According to some embodiments of the present application, referring to Figs. 3 to 10, the present application provides battery cell 20. Battery cell 20 includes end cover assembly 21, case 22, electrode assembly 23 and insulating film 24. End cover assembly 21 includes end cover 211, electrode terminal 212, pressure relief mechanism 213 and insulator 214. Electrode terminal 212 is disposed on end cover 211, pressure relief mechanism 213 is disposed on end cover 211, and insulator 214 is disposed on one side of end cover 211 facing the interior of battery cell 20. case 22 has an end opening, and electrode assembly 23 is disposed in case 22. End cover 211 covers the end opening. Insulator 214 includes insulator body 2141 and protrusion 2142. Insulator body 2141 has first surface 21411 and second surface 21412 oppositely disposed in its thickness direction Z. First surface 21411 faces electrode assembly 23, second surface 21412 faces away from electrode assembly 23, protrusion 2142 is formed on first surface 21411, protrusion 2142 is provided with air vent 2143, air vent 2143 runs through protrusion 2142 in a direction intersecting with thickness direction Z, and protrusion 2142 abuts against electrode assembly 23. Insulator body 2141 is in the shape of cuboid, protrusion 2142 includes second protrusion 2142b, second protrusion 2142b is disposed in the middle of insulator body 2141, second protrusion 2142b extends in the width direction of insulator body 2141, air vent 2143 runs through second protrusion 2142b in a length direction of insulator body 2141, second protrusion 2142b is of a hollow structure, second surface 21412 is provided with opening 21413 communicating with the interior of second protrusion 2142b, air vent 2143 in second protrusion 2142b communicates with the interior of second protrusion 2142b, pressure relief mechanism 213 is disposed on a position of end cover 211 corresponding to second protrusion 2142b, and pressure relief mechanism 213 at least partially overlaps opening 21413.

Since air vent 2143 runs through protrusion 2142, the resistance of protrusion 2142 to the flow of gas is reduced, and when thermal runaway of battery cell 20 occurs, the gas generated inside battery cell 20 can quickly flow to pressure relief mechanism 213, which improves the safety of battery cell 20.

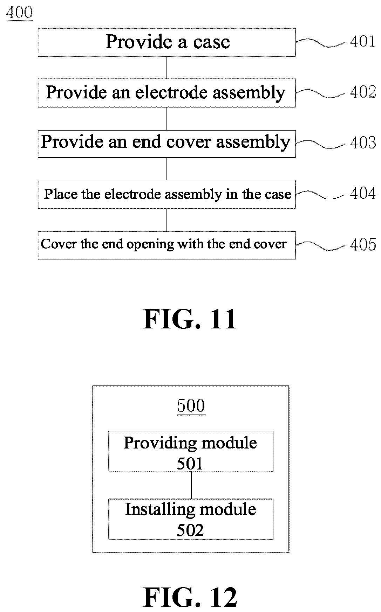

Fig. 11 shows a schematic flowchart of manufacturing method 400 of a battery cell provided by some embodiments of the present application. As shown in Fig. 11, manufacturing method 400 of the battery cell may include:
401, case 22 is provided, wherein case has an end opening;
402, electrode assembly 23 is provided;
403, end cover assembly 21 is provided, wherein end cover assembly 21 includes end cover 211, electrode terminal 212, pressure relief mechanism 213 and insulator 214, electrode terminal 212 is disposed on end cover 211, pressure relief mechanism 213 is disposed on end cover 211, pressure relief mechanism 213 is configured to release an internal pressure when the internal pressure of battery cell 20 reaches a threshold value, insulator 214 is disposed on end cover 211, insulator 214 includes insulator body 2141 and protrusion 2142, insulator body 2141 has first surface 21411 and second surface 21412 oppositely disposed in its thickness direction Z, protrusion 2142 is formed on first surface 21411, protrusion 2142 is provided with air vent 2143, and air vent 2143 runs through protrusion 2142 in a direction intersecting with thickness direction Z;
404, electrode assembly 23 is placed in case 22; and
405, end cover 211 is covered on the end opening, so that insulator 214 is located on one side of end cover 211 facing the interior of battery cell 20, and protrusion 2142 abuts against electrode assembly 23.

Fig. 12 shows a schematic flowchart of manufacturing equipment 500 for a battery cell provided by some embodiments of the present application. As shown in Fig. 12, manufacturing equipment 500 for a battery cell may include: providing module 501 and installing module 502.

Providing module 501 is configured to provide case 22, provide electrode assembly 23 and provide end cover assembly 21, wherein case 22 has an end opening, end cover assembly 21 includes end cover 211, electrode terminal 212, pressure relief mechanism 213 and insulator 214, electrode terminal 212 is disposed on end cover 211, pressure relief mechanism 213 is disposed on end cover 211, pressure relief mechanism 213 is configured to release an internal pressure when the internal pressure of battery cell 20 reaches a threshold value, insulator 214 is disposed on end cover 211, insulator 214 includes insulator body 2141 and protrusion 2142, insulator body 2141 has first surface 21411 and second surface 21412 oppositely disposed in its thickness direction Z, protrusion 2142 is formed on first surface 21411, protrusion 2142 is provided with air vent 2143, and air vent 2143 runs through protrusion 2142 in a direction intersecting with thickness direction Z.

Installing module 502 is configured to place electrode assembly 23 in case 22, and cover the end opening with end cover 211, so that insulator 214 is located on one side of end cover 211 facing the interior of battery cell 20, and protrusion 2142 abuts against electrode assembly 23.

Although the present application has been described with reference to the preferred embodiments, various improvements can be made thereto and components thereof can be replaced with equivalents without departing from the scope of the present application. In particular, the technical features mentioned in the various embodiments can be combined in any manner as long as there is no structural conflict. The present application is not limited to the specific embodiments disclosed herein, but rather includes all technical solutions falling within the scope of the claims.

## Claims

1. An insulator, used for a battery cell, comprising:
an insulator body, having a first surface and a second surface oppositely disposed in its thickness direction, the first surface facing an electrode assembly of the battery cell, and the second surface facing away from the electrode assembly; and
a protrusion, formed on the first surface and used for abutting against the electrode assembly; wherein
the protrusion is provided with an air vent, and the air vent runs through the protrusion in a direction intersecting with the thickness direction.

2. The insulator according to claim 1, wherein the protrusion comprises a bottom surface and an outer peripheral surface, the bottom surface is used to abut against the electrode assembly, the outer peripheral surface is disposed around the bottom surface, the outer peripheral surface connects the bottom surface with the first surface, and the air vent is disposed in the outer peripheral surface.

3. The insulator according to claim 2, wherein the protrusion extends in a first direction, the air vent runs through the protrusion in a second direction perpendicular to the first direction, and the first direction and the second direction are both parallel to the first surface.

4. The insulator according to claim 3, wherein the protrusion is provided with a plurality of air vents, and the plurality of air vents are disposed at intervals in the first direction.

5. The insulator according to claim 3 or 4, wherein a plurality of protrusions are disposed, and the plurality of protrusions are disposed at intervals in the second direction.

6. The insulator according to claim 5, wherein the insulator body is a rectangular plate, the second direction is a length direction of the insulator body, the protrusions comprise a first protrusion, a second protrusion and a third protrusion, the first protrusion and the third protrusion are located at both ends of the insulator body in the length direction, and the second protrusion is located between the first protrusion and the third protrusion.

7. The insulator according to claim 6, wherein the second protrusion is of a hollow structure, the second surface is provided with an opening communicating with the interior of the second protrusion, and the air vent in the second protrusion communicates with the interior of the second protrusion.

8. The insulator according to claim 7, wherein the second surface is provided with a groove for avoiding a pressure relief mechanism of the battery cell, and the groove at least partially overlaps with the opening.

9. An end cover assembly, used for a battery cell, comprising:
an end cover;
an electrode terminal, disposed on the end cover;
a pressure relief mechanism, disposed on the end cover, and configured to release an internal pressure of the battery cell when the internal pressure reaches a threshold value; and
the insulator according to any one of claims 1-8, the insulator being disposed on one side of the end cover facing the interior of the battery cell.

10. The end cover assembly according to claim 9, wherein the insulator body is in the shape of cuboid, the protrusion comprises a second protrusion, the second protrusion is disposed in the middle of the insulator body, the second protrusion extends in the width direction of the insulator body, the air vent runs through the second protrusion in the length direction of the insulator body, the second protrusion is of a hollow structure, the second surface is provided with an opening communicating with the interior of the second protrusion, the air vent in the second protrusion communicates with the interior of the second protrusion, the pressure relief mechanism is disposed on a position of the end cover corresponding to the second protrusion, and in the thickness direction, a projection of the pressure relief mechanism at least partially overlaps with a projection of the opening.

11. The end cover assembly according to claim 9 or 10, wherein the second surface is provided with a positioning portion, the end cover is provided with a positioning hole corresponding to the positioning portion, and the positioning portion is inserted into the positioning hole.

12. A battery cell, comprising:
a case, having an end opening;
an electrode assembly, disposed in the case; and
the end cover assembly according to any one of claims 9-11, wherein the end cover covers the end opening, and the protrusion abuts against the electrode assembly.

13. The battery cell according to claim 12, further comprising:
an insulating film, wrapped outside the electrode assembly for insulating and isolating the electrode assembly from the case, wherein the insulating film is connected with the protrusion, the insulating film is provided with a notch, and the notch is disposed corresponding to the air vent, so that gas generated inside the battery cell enters the air vent through the notch.

14. The battery cell according to claim 13, wherein the insulating film is in hot melt connection with the protrusion.

15. A battery, comprising the battery cell according to any one of claims 12-14.

16. An electrical device, comprising the battery cell according to any one of claims 12-14.

17. A manufacturing method of a battery cell, comprising:
providing a case, wherein the case has an end opening;
providing an electrode assembly;
providing an end cover assembly, wherein the end cover assembly comprises an end cover, an electrode terminal, a pressure relief mechanism and an insulator, the electrode terminal is disposed on the end cover, the pressure relief mechanism is disposed on the end cover, the pressure relief mechanism is configured to release an internal pressure of the battery cell when the internal pressure reaches a threshold value, the insulator is disposed on the end cover, the insulator comprises an insulator body and a protrusion, the insulator body has a first surface and a second surface oppositely disposed in its thickness direction, the protrusion is formed on the first surface, the protrusion is provided with an air vent, and the air vent runs through the protrusion in a direction intersecting with the thickness direction;
placing the electrode assembly in the case; and
covering the end opening with the end cover, so that the insulator is located on one side of the end cover facing the interior of the battery cell, and the protrusion abuts against the electrode assembly.

18. Manufacturing equipment for a battery cell, comprising:
a providing module, configured to provide a case, provide an electrode assembly and provide an end cover assembly, wherein the case has an end opening, the end cover assembly comprises an end cover, an electrode terminal, a pressure relief mechanism and an insulator, the electrode terminal is disposed on the end cover, the pressure relief mechanism is disposed on the end cover, the pressure relief mechanism is configured to release an internal pressure of the battery cell when the internal pressure reaches a threshold value, the insulator is disposed on the end cover, the insulator comprises an insulator body and a protrusion, the insulator body has a first surface and a second surface oppositely disposed in its thickness direction, the protrusion is formed on the first surface, the protrusion is provided with an air vent, and the air vent runs through the protrusion in a direction intersecting with the thickness direction; and
an installing module, configured to place the electrode assembly in the case, and cover the end opening with the end cover, so that the insulator is located on one side of the end cover facing the interior of the battery cell, and the protrusion abuts against the electrode assembly.
